# EUROPEAN PATENT APPLICATION

(11) **EP 1 315 348 A2**
(43) Date of publication of application: **28.05.2003**
(21) Application number: 02015634.5
(22) Date of filing: 16.07.2002
(51) Int. Cl.: H04L 29/00

(54) **Power bus information transmission system and method of data transmission**

(30) Priority: 18.07.2001 US 908104
(71) Applicant: TRW Inc., Redondo Beach, California 90278 (US)
(72) Inventor: Boolos, Timothy L., Mary Esther, Florida 32569 (US); Chandler, Billy J., Fort Walton Beach, Florida 32548 (US)
(74) Representative: Schmidt, Steffen J., Dipl.-Ing.

(57) **Abstract**

The invention is a power bus data transmission system (10) and method of data transmission. An existing system power bus functions (22) as the backbone data transmission network for transmitting data transmissions between at least one new device and at least one other device in an existing system (11) without the addition of new wiring to transmit the data transmissions. Assemblies of processors (40), device interfaces (50) and modems (130) may be used to connect the devices (12, 14, 16, 18) to the system power bus.

## Description

### BACKGROUND OF THE INVENTION

### Field of the Invention

The present invention relates to data transmission over a power bus of a system between at least one new device and at least one other device of the system without requiring the addition of new wiring, such as, but not limited to, to the transmission of data between at least one new device added to an airframe and the remainder of the airframe.

### Description of the Prior Art

It is known that the power bus of a system such as a vehicle may be used to transmit information between components of the system by transmitting a modulated carrier over the bus which contains information to be transmitted between the components. See United States Patents 4,438,519, 4,641,322 and 6,127,939.

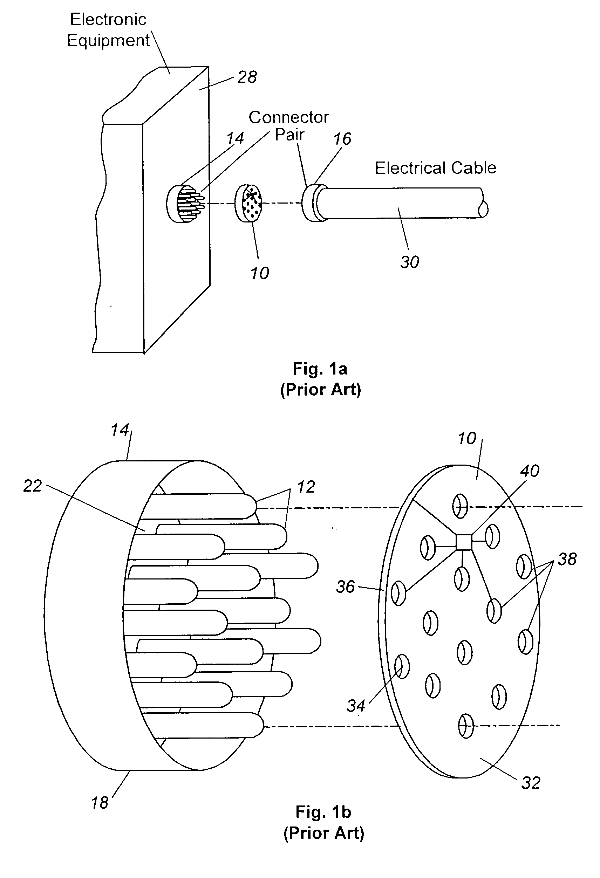

Figs. 1A and 1B illustrate an interface conditioning insert wafer in accordance with the Assignee's United States Patent 5,290,191 which is incorporated herein by reference in its entirety. The interior of the male connector 14 includes a nonconductive plate 22 that maintains the orientation of the pins 12 and provides insulation thereof from the conductive shell 18. The female connector 16 likewise includes a nonconductive plate (not illustrated) and an array of sockets (not illustrated) for receiving the pins 12.

The male connector 14 is shown in Fig. 1A as being coupled to electronic equipment 28. The female connector 16 is mounted on one end of an electrical cable 30. The cable contains a plurality of wires that carry electrical signals between the electronic equipment 18 and other parts of the system of which the electronic equipment is a part when the connectors 14 and 16 are mated together.

The wafer 10 is removably inserted between the mated connectors 14 and 16 in order to provide an interface between the electronic equipment 28 and another part of the system of which the electronic equipment is a part. The wafer 10 has a diameter smaller than the inner diameter of the smallest connector shell and is thin enough to be inserted between the connector pair when mated together without interfering with the positive connection there between. For a MIL-C-38999 connector pair, the maximum wafer thickness may be 0.030" so as not to interfere with normal connector mate. Wafer 10 includes two generally parallel major surfaces 32 and 34, along with a peripheral edge 36. A series of holes 38 are formed between the two major faces of the wafer. Holes 38 are aligned with and slightly larger than the diameter of pins 12.

Circuitry, generally designated by the numeral 40, is formed on the wafer 10 and is in electrical contact with one or more of the pins 12. The circuitry 40 can be any of a wide variety of devices such as active and passive electronic components, as well as more sophisticated microprocessing circuitry. The circuitry 40 is generally designed to perform preselected functions associated with the conditioning of the electrical signals on the pins 12. These functions include, but are not limited to, signal rerouting or grounding and interface protection using passive electronic components such as current/voltage monitors, transient limiters such as capacitive filters and point-to-point wiring. Active electronics such as analog and logic circuitry, matrix switches, power management devices and buffer amplifiers can be utilized to provide discrete event monitoring, integrated built-in test augmentation and diagnostics, signal processing, interface diagnostics and/or signal conditioning. Circuitry 40, on the other hand, may take the form of microprocessing circuitry and may include static RAM and ROM as well as non-volatile memory. In that event, the circuitry can provide discrete event recordation and decision based signal conditioning/diagnostics.

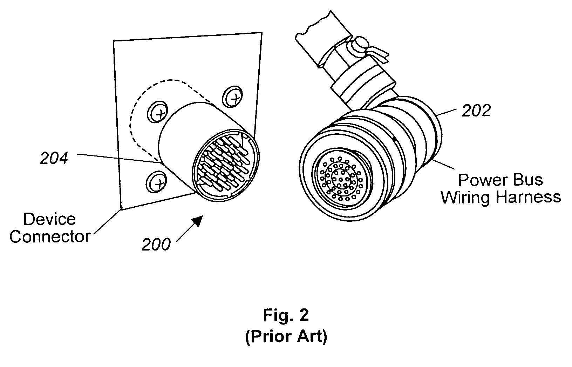

Fig. 2 illustrates a prior art connector 200 used in airframes. The connector 200 has a female connector 202 which is connected to power bus of the airframe and a male connector 204 which is connected to a device (not illustrated) in the airframe, such as avionics, line replaceable units (LRUs) or munitions.
The connector as illustrated may be used for a MIL-STD-1553 connector. Electrical power is provided to the device through the mated connectors 202 and 204.

The retrofitting of an aircraft to add new equipment, LRUs and/or munitions, including new wiring, is a complex process which can require many months of modification time and involve substantial expense. When new digital devices are added to after market military or commercial aircraft, the addition thereof typically requires new bus wiring or an expanded load on the already heavily loaded aircraft wiring cockpit applications. New devices that may only require minutes to install often require an entire airframe to be nearly disassembled to allow new wiring runs to the new devices. Furthermore, the new wiring adds weight to the aircraft and takes up space which is always disadvantageous in any airframe design and is especially so with high performance airframes in which high speed maneuverability is important.

Furthermore, new equipment, such as LRUs or munitions, which are retrofitted to an airframe often require high bandwidth data links between the new equipment to points in the airframe where control or monitoring is performed. High bandwidth communications between state of the art digital equipments are necessary.

### SUMMARY OF THE INVENTION

The present invention provides a data transmission system and method which is utilized to connect at least one new device of a system to at least one other device of the system using the power bus of the system without new wiring. The new device to be linked for data transmission to at least one other device may be the addition of diverse types of new equipment to an existing system such as retrofitting of an airframe. The new equipment may, without limitation, be retrofitted to an airframe and may include sensors, avionics, LRUs, munitions, displays and/or control electronics. The invention facilitates the addition of diverse types of new equipment or systems within an existing system without the addition of wiring to support the communication requirements thereof.

In accordance with the invention, the power bus of the existing system, such as an airframe, is reprogrammable and reconfigurable to support a variety of bus interface standards, such as, but not limited to RS-422, MIL-STD-1553, MIL-STD-1776 ARINC 429 and others. Data transmissions are bidirectional over the power bus to addressable nodes which are processors connected to data transmitting and receiving devices operating with the diverse data bus interface standards. The data transmissions between the nodes do not require transmission through a master controller.

The prior art insert wafers of Figs. 1 and 2 provide a convenient type of device interface to a processor and modem interface to the power bus. The insert wafers are used to perform signal processing functions and data storage to alter the timing of data signals and or buffering of data transmissions between a device and a processor so as to insure compliance with the bus interface standard used by the device and any other timing or data storage requirements of the processors. Additionally, the insert wafers convert the physical pattern of data pins from the device connector into a physical pattern necessary to match the leads of the integrated circuit of the processor.

Each device interface may be powered by a power supply which obtains electrical power from the system containing the power bus which, in an airframe, typically converts the 120 volt, 400 Hz., AC power into the appropriate AC or DC potentials necessary to operate the power bus data transmission system. Without limitation, the power supply may provide either 28-volts DC or 5 volts DC which is obtained from rectification of the aforementioned 120 volt, 400 Hz, AC power supply typically present on an airframe.

The use of the insert wafer to provide interfaces to the devices and the power bus is non-intrusive and permits the connection to the devices and the power bus by inserting the wafers in line between the power bus and the devices with male and female bus connectors, such as, but without limitation, power bus connectors used to make connections to devices in an airframe.

While a preferred implementation of the present invention is on airframes, such as military aircraft, the present invention may be used in diverse applications where the retrofitting of new equipment having substantial data transmission or reception requirements is required to be made without invasive effects or substantial modification of the system including, but not limited to, the addition of new wiring.

A power bus data transmission system in accordance with the invention includes a plurality of modems; a power bus coupled to each of the modems with data transmissions between the modems being transmitted by the power bus with a power bus data transmission protocol; a plurality of processors which use a common processor data protocol, each processor being coupled to one of the modems; a plurality of devices, each device receiving and/or transmitting data transmissions with a device data protocol and being coupled to a processor; and wherein each processor translates data transmissions in a device data protocol received from a device into the common processor protocol which are transmitted to a modem coupled thereto and translates data transmissions received from a modem in the common data processor protocol into the device data protocol of the device coupled thereto which is transmitted to the device coupled thereto and each modem modulates data transmissions received from the processor coupled thereto into the power bus data transmission protocol which are transmitted by the power bus and demodulates data transmissions received from another modem in the power bus data transmission protocol into the common processor protocol and transmits the data transmission in the common processor protocol to the processor coupled thereto. The power bus data transmission system may further include a plurality of device interfaces, each device interface being coupled to a device and a processor and modifying timing of data transmissions between the device and processor coupled thereto and/or buffering the data transmissions between the device and the processor coupled thereto. Each device interface may convert data transmission outputs from the device into a configuration to match integrated circuit inputs of the processor coupled thereto. The common processor data protocol may be the Internet protocol. The device data protocol may be RS-422, MIL-STD-1553, MIL-STD-1760, or ARINC 429. The power bus data transmission protocol may be orthogonal frequency division multiplexing. The power bus may be on an airframe; and the devices may be equipment of the airframe including munitions and avionics. The plurality of modems and processors may be connected together in pairs, each pair being contained in a housing, and each housing being plugged into a device connector of one of the devices and into the power bus. At least one device interface may comprise an insert which contacts conductors of the device over which data transmissions are transmitted.

A method of data transmission using a power bus data transmission system including a plurality of modems, a system power bus coupled to each of the modems with data transmissions between the modems being transmitted by the power bus with a power bus data transmission protocol, a plurality of processors which use a common processor data protocol, each processor being coupled to one of the modems, and a plurality of devices, each device receiving and/or transmitting data transmissions with a device data protocol and being coupled to a processor in accordance with the invention includes each processor translating data transmissions in a device data protocol received from a device into the common processor protocol which are transmitted to a modem coupled thereto and translating data transmissions received from a modem in the common data processor protocol into the device data protocol of the device coupled thereto which is transmitted to the device coupled thereto; and each modem modulates data transmissions received from the processor coupled thereto into the power bus data transmission protocol which are transmitted by the system power bus and demodulates data transmissions received from another modem in the power bus data transmission protocol into the common processor protocol and transmits the data transmissions in the common processor protocol to the processor coupled thereto. The power bus data transmission system may comprise a plurality of device interfaces; and each device interface may be coupled to a device and a processor and modify timing of data transmissions between the device and processor coupled thereto and/or buffer the data transmissions between the device and the processor coupled thereto. Each device interface may convert data transmission outputs from the device into a configuration to match integrated circuit inputs of the processor coupled thereto. The common processor data protocol may be the Internet protocol. The power bus data transmission protocol may be orthogonal frequency division multiplexing.

### BRIEF DESCRIPTION OF THE DRAWINGS

Figs. 1A and 1B illustrate a prior art interface conditioning insert wafer in accordance with the Assignee's United States Patent 5,290,191 which may be used in the practice of the present invention.

Fig. 2 illustrates a prior art connector having male and female parts for making electrical connection between a power bus of an airframe and a device in the airframe such as avionics.

Fig. 3 illustrates a power bus data transmissions system in accordance with the present invention.

Fig. 4 illustrates an insert wafer in accordance with the prior art of Fig. 1 which may be used to provide interfaces between devices and a power bus in accordance with the present invention.

Fig. 5 illustrates a housing containing the interfaces between the devices and power bus and a processor and modem.

### DESCRIPTION OF THE PREFERRED EMBODIMENT

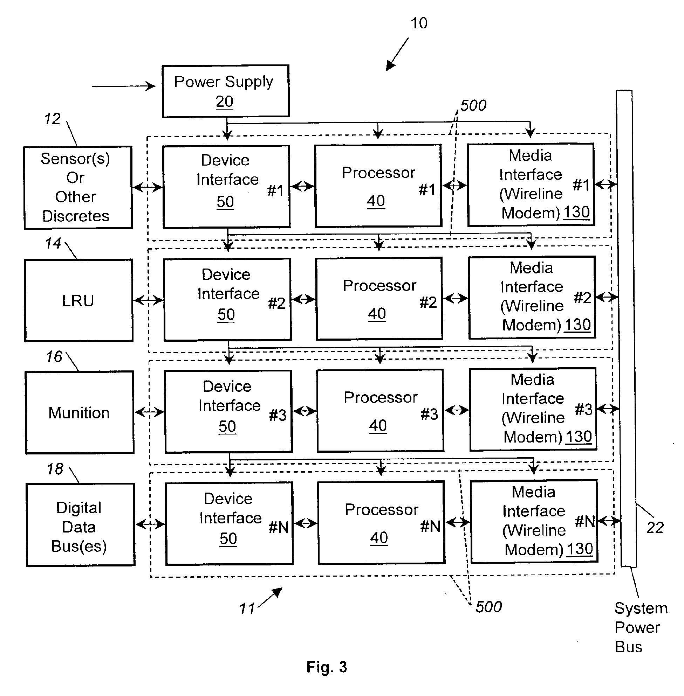

Fig. 3 illustrates a power bus data transmission system 10 in accordance with the present invention which provides data transmission between devices in a system 11, such as an existing system to which new devices are being added, over the existing system's power bus 22 without the need for new wiring. The existing system 11 may without limitation be an airframe to which devices, such as new equipment, munitions, LRUs, avionics, controls, digital devices, displays or systems are added thereto which have substantial data transmission or reception requirements.

The possible existing or new devices which obtain their data transmission requirements over the system power bus 22 are of a diverse nature. The devices may be sensors 12 providing communications between devices such as, but not limited to, vehicle controls such as new pilot controls and other devices in the system. The devices may be LRUs 14 and munitions 16 having wideband data communication bandwidth requirements, such as, at data rates up to, but not limited to, 20 MHz. The devices may be digital data buses 18 representing sources of computer generated data in the system which may have diverse data bus specifications, such as, but not limited to, RS-422, ARINC 429 and MIL-STDs-1553 and 1760. Each of the aforementioned devices 12-18 generate data in any native data mode, which may be without limitation analog or digital data including digital data encoded with particular data bus protocol such as those identified above.

Power supply 20 converts the power from the existing system 11 into the power required to operate the power bus data transmission system 10 which, in a preferred application, without limitation, may utilize 28 volts DC and 5 volts DC utilized conventionally in airframe applications. Power supply 20 may, without limitation, rectify AC, such as 400 Hz at 120 volts, into the aforementioned DC potentials for powering each of the components in the system.

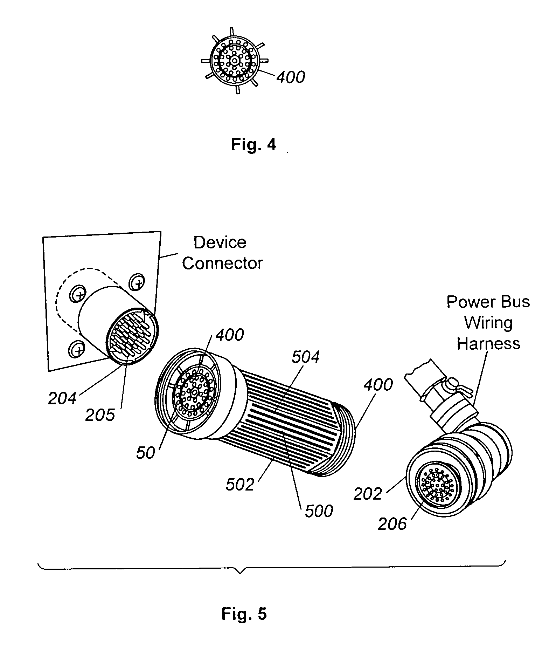

The power bus data transmission system 10 is based upon a distributed processor architecture having processors 40 which are coupled to a device interface 50 and a media interface 130 which functions as a modem. The processors emulate the device data protocols which typically are digital data bus specifications such as, without limitation, RS-422 ARINC 429 and MIL-STDs-1553 and 1760. These devices in a preferred embodiment are assembled into a housing which plugs into connectors to the devices 12-18 and to the system power bus 22 as illustrated in Fig. 5.

Each of the processors uses a common processor protocol which, without limitation, may be the Internet protocol (IP). The processors convert all data transmissions from the devices 12-18, which are in diverse data protocols specific to the devices, into the common processor protocol. This permits communications from any device in the system 10 to be transmitted to any other device through an associated processor 40 coupled to the device to which the data transmission is addressed.

The bus emulation feature of the processors, which all operate in the common data processor protocol, permits all data transmissions to be compatibly processed by a processor coupled to the device to which the data transmission is addressed and converted into the device data protocol of the device.

The system power bus 22, which may be in accordance with any known design, functions as the backbone data transmission network for transmitting bidirectional data transmissions between the various devices 12-18. Bus contention to obtain access to the system power bus 22 for transmitting the bidirectional data transmissions between the processors 40 may be handled in accordance with IEEE specification 803.11 or by any other bus contention mechanism. The system power bus 22 uses a power bus data transmission protocol for data transmissions between the modems 130 which may be, without limitation, orthogonal frequency division multiplexing (OFDM). OFDM is an adaptive modulation technique using spread spectrum technology supporting data rates up to, but not limited to, 20 MHz.

The use of the existing system power bus 22 as the backbone data transmission network does not require modification or disassembly of the system, such as an airframe, except to make the physical connection of the processors 40, device interfaces 50 and modems 130, which may be packaged in assembly 500 connected between the connectors 202 and 204 as illustrated in Fig. 5 with the attendant labor and time savings. Weight savings are also realized by not adding new wiring in the airframe to support the operation of the new devices 12-18.

Each device interface 50 is coupled to one of the devices 12-18 and to a processor 40. The device interfaces 50 may, if required, modify timing of data transmissions between the devices 12-18 and processors 40 coupled thereto and/or provide buffering of the data with memory storage therein of the buffered data and to convert physical data transmission outputs to match integrated circuit inputs of the processor coupled thereto.

Each media interface 130, which functions as a modem, modulates the data transmissions received from the connected processor 40 in the common data processor protocol used by all processors into the power bus data transmission protocol. The data transmissions modulated in the power bus data transmission protocol by the media interfaces 130 are transmitted by the system power bus 22. The media interfaces 130 also demodulate the data transmissions received from other devices 12-18 over the system power bus 22 into the common processor protocol and transmit the demodulated transmissions to the connected processor 40.

Fig. 4 illustrates an insert wafer 400 generally in accordance with the prior art of Figs. 1 and 2 which is used to provide a preferred form of the device interface 50 with the functional capability as explained above and an interface to a power bus wiring harness 202 as illustrated in the prior art of Fig. 2 in Fig. 5. The interface to the power bus wiring harness 202 may be designed to provide necessary signal timing and data buffering to conform to a particular device data protocol. The physical connection of integrated circuit pins or printed circuit board connections from the modems 130 to the female connectors of the power bus wiring harness may be made by an interface provided by an insert wafer.

Fig. 5 illustrates a preferred embodiment of an assembly 500 of the processor 40, device interface 50 and media interface 130 of Fig. 2 which are contained in a housing 502. Integrated circuits which implement the processors 40, and media interface 130 are located on a printed circuit board(s) inside the housing 502 which has heat radiating fins 50² on the outside. As illustrated, the assembly 500 plugs into the female and male connectors, such as those of the prior art of Fig. 2, or an analogous connector assembly respectively connected to a device 12-18 and the system power bus 22. The insert wafer 400, which functions as the device interface 50, receives the male connectors 205 of the device connector 204. The insert wafer 400, which is connected to the power bus wiring harness 202 receives male connectors which fit into the female receptacles 206.

Reprogramming and data collection in the system 10 may be accomplished in diverse ways.

The invention has applications to military and commercial aircraft by providing a compact, low cost, and rapid way to extend avionics data bus architectures to support additional aircraft electronics, sensor LRUs and munitions, etc. without new wiring.

The invention also provides avionics bus redundancy through a power bus so that if a primary avionics bus, (not illustrated) is damaged or destroyed, control by sending data transmissions over the system power bus 22 may be maintained.

While the invention has been described in terms of its preferred embodiments, it should be understood that numerous modifications of the invention may be made without departing from the scope of the invention. It is intended that all such modifications fall within the scope of the appended claims.

## Claims

1. A power bus data transmission system comprising:
a plurality of modems;
a power bus coupled to each of the modems with data transmissions between the modems being transmitted by the power bus with a power bus data transmission protocol;
a plurality of processors which use a common processor data protocol, each processor being coupled to one of the modems; and
a plurality of devices, each device receiving and/or transmitting data transmissions with a device data protocol and being coupled to a processor; and wherein
each processor translates data transmissions in a device data protocol received from a device into the common processor protocol which are transmitted to a modem coupled thereto and translates data transmissions received from a modem in the common data processor protocol into the device data protocol of the device coupled thereto which is transmitted to the device coupled thereto and each modem modulates data transmissions received from the processor coupled thereto into the power bus data transmission protocol which are transmitted by the power bus and demodulates data transmissions received from another modem in the power bus data transmission protocol into the common processor protocol and transmits the data transmission in the common processor protocol to the processor coupled thereto.

2. A system in accordance with claim 1 and further comprising:
a plurality of device interfaces, each device interface being coupled to a device and a processor and modifying timing of data transmissions between the device and processor coupled thereto and/or buffering the data transmissions between the device and the processor coupled thereto.

3. A system in accordance with claim 2, wherein:
each device interface converts data transmission outputs from the device into a configuration to match integrated circuit inputs of the processor coupled thereto.

4. A system in accordance with claims 1, 2 or 3 wherein:
the common processor data protocol is the Internet protocol.

5. A system in accordance with claim 1 wherein:
the device data protocol is selected from the group consisting of RS-422, MIL-STD-1553, MIL-STD-1760, and ARINC 429.

6. A system in accordance with claim 1 wherein:
the power bus data transmission protocol is orthogonal frequency division multiplexing.

7. A system in accordance with claim 1 wherein:
the power bus is on an airframe; and
the devices are equipment of the airframe.

8. A system in accordance with claims 1 or 2 wherein:
the plurality of modems and processors are connected together in pairs, each pair being contained in a housing; and
each housing is plugged into a device connector of one of the devices and into the power bus.

9. A system in accordance with claim 8 wherein:
the power bus in on an airframe; and
the devices are equipment of the airframe.

10. A system in accordance with claims 2 or 3 wherein:
at least one device interface comprises an insert in a connected pair of connections which contacts conductors of the device over which data transmissions are transmitted.

11. A method of data transmission using a power bus data transmission system including a plurality of modems, a system power bus coupled to each of the modems with data transmissions between the modems being transmitted by the power bus with a power bus data transmission protocol, a plurality of processors which use a common processor data protocol, each processor being coupled to one of the modems, and a plurality of devices, each device receiving and/or transmitting data transmissions with a device data protocol and being coupled to a processor comprising:
each processor translating data transmissions in a device data protocol received from a device into the common processor protocol which are transmitted to a modem coupled thereto and translating data transmissions received from a modem in the common data processor protocol into the device data protocol of the device coupled thereto which is transmitted to the device coupled thereto; and
each modem modulates data transmissions received from the processor coupled thereto into the power bus data transmission protocol which are transmitted by the system power bus and demodulates data transmissions received from another modem in the power bus data transmission protocol into the common processor protocol and transmits the data transmissions in the common processor protocol to the processor coupled thereto.

12. A method in accordance with claim 11, wherein:
each device interface is coupled to a device and a processor and modifies timing of data transmissions between the device and processor coupled thereto and/or buffers the data transmissions between the device and the processor coupled thereto.

13. A method in accordance with claim 12, wherein:
each device interface converts data transmission outputs from the device into a configuration to match integrated circuit inputs of the processor coupled thereto.

14. A method in accordance with claims 11, 12, or 13 wherein the common processor data protocol is the Internet protocol.

15. A method in accordance with claim 11 wherein:
the power bus data transmission protocol is orthogonal frequency division multiplexing.
